(19) Europäisches Patentamt
European Patent Office
Office européen des brevets

(11) **EP 3 060 770 B1**

(12) **FASCICULE DE BREVET EUROPEEN**

(45) Date de publication et mention
de la délivrance du brevet:
**08.11.2017 Bulletin 2017/45**

(21) Numéro de dépôt: **14780537.8**

(22) Date de dépôt: **11.09.2014**

(51) Int Cl.:
*F01N 3/08* *(2006.01)*        *F01N 11/00* *(2006.01)*

(86) Numéro de dépôt international:
**PCT/FR2014/052248**

(87) Numéro de publication internationale:
**WO 2015/059375 (30.04.2015 Gazette 2015/17)**

(54) **PROCEDE DE DIAGNOSTIC D'UN PIEGE A OXYDES D'AZOTE ET DISPOSITIF ASSOCIE**

VERFAHREN ZUR DIAGNOSE EINER STICKOXIDFALLE UND ZUGEHÖRIGE VORRICHTUNG

METHOD FOR DIAGNOSING A NITROGEN OXIDE TRAP AND RELATED DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.10.2013 FR 1360334**

(43) Date de publication de la demande:
**31.08.2016 Bulletin 2016/35**

(73) Titulaire: **Renault S.A.S.**
**92100 Boulogne-Billancourt (FR)**

(72) Inventeurs:
• **SELLAMI, Ali**
  **F-75015 Paris (FR)**
• **THUILLIER, Pascal**
  **F-45770 Saran (FR)**

(56) Documents cités:
**FR-A1- 2 940 356**

## Description

DOMAINE TECHNIQUE DE L'INVENTION

L'invention concerne un procédé de diagnostic de l'état de fonctionnement d'un piège à oxydes d'azote. Elle concerne également un dispositif de diagnostic apte à la mise en oeuvre d'un tel procédé. Elle trouve une application avantageuse sous la forme d'un diagnostic embarqué dans un véhicule automobile équipé d'un moteur diesel associé à un piège à oxydes d'azotes.

ETAT DE LA TECHNIQUE

De nombreux moteurs modernes à combustion interne, en particulier les moteurs diesel des véhicules automobiles, sont équipés d'un piège à oxydes d'azote ($NO_x$) pour respecter les normes légales qui limitent les émissions à l'échappement de polluants par ces véhicules.

Un piège à oxydes d'azote est généralement placé dans la ligne d'échappement d'un véhicule et fonctionne de manière discontinue, selon deux modes distincts.

Pendant le fonctionnement habituel du moteur en mélange pauvre, le piège retient une partie des molécules de $NO_x$ émises par le moteur sur différents compartiments catalytiques de stockage, le reste étant rejeté dans l'atmosphère après avoir traversé le piège. Le pourcentage de molécules de $NO_x$ du moteur qui est retenu par le piège est appelé efficacité de stockage.

Quand la masse de $NO_x$ stockée dans le piège atteint un seuil prédéterminé en fonction de la capacité maximale de stockage, un basculement provoqué du fonctionnement du moteur en mélange riche, c'est-à-dire avec un défaut d'oxygène par rapport à la stoechiométrie, permet de régénérer le piège.

La phase de régénération consiste à purger le piège des $NO_x$ accumulés lors de la phase de fonctionnement de stockage. Au cours de cette phase de fonctionnement en mélange riche, des réducteurs (hydrocarbures imbrûlés HC et monoxyde de carbone CO) provenant du moteur passent dans le piège et réduisent les molécules de $NO_x$ en molécules d'azote $N_2$ et de dioxyde de carbone $CO_2$.

Pendant la phase de purge, on règle la richesse à une valeur moyenne qui est généralement à peine supérieure à 1, plus précisément une valeur comprise entre 1,03 et 1,05, par exemple 1,04.

Une telle valeur de richesse représente un bon compromis entre la durée de la régénération et la quantité de carburant consommée. En outre, on évite généralement d'augmenter davantage la richesse du mélange pour deux raisons principales.

En premier lieu, l'enrichissement consiste généralement à injecter dans les cylindres du moteur une quantité de carburant qui ne participe pas à la combustion. La plus grande part de ce carburant est évacuée à l'échappement du moteur vers le piège pour y réduire les oxydes d'azote, mais une proportion résiduelle de ce carburant, qui est d'autant plus grande que la richesse est élevée, pénètre dans l'huile du moteur notamment en passant à travers la segmentation des pistons. La dilution progressive du carburant dans l'huile dégrade les propriétés lubrifiantes de l'huile, ce qui oblige alors à procéder à des vidanges plus fréquentes du moteur.

D'autre part, on a remarqué qu'une régénération réalisée avec une richesse moyenne plus élevée, par exemple 1,10, peut faire courir le risque que des réducteurs se combinent, avec le soufre présent dans le carburant et stocké dans le piège, en molécules de sulfure d'hydrogène $H_2S$ malodorantes, dans certaines conditions de température élevée.

Sous l'effet du vieillissement, et parfois d'événements accidentels tels que des chocs thermiques ou mécaniques, l'efficacité de stockage d'un piège à oxydes d'azote diminue, à cause de la baisse du nombre de compartiments catalytiques disponibles dans le piège pour stocker les molécules de $NO_x$.

Pour s'assurer que les rejets dans l'atmosphère des gaz d'échappement d'un véhicule automobile sont en permanence conformes aux normes légales, il est courant de surveiller l'état de fonctionnement de son piège à oxydes d'azote, c'est-à-dire de tester son efficacité de stockage, grâce à un diagnostic embarqué.

On connaît plusieurs procédés qui visent à surveiller l'état de fonctionnement d'un piège à oxydes d'azote.

En particulier, la publication FR 2 940 356-B1 divulgue un procédé de diagnostic dans lequel on détermine un critère de diagnostic égal à la masse de réducteurs utilisée pendant la régénération en mode riche d'un piège à oxydes d'azote, et on compare ce rapport avec un seuil.

La masse de réducteurs consommée est égale à l'intégrale temporelle de la différence entre le débit massique de réducteurs entrant dans le piège, diminué du débit massique de réducteurs sortant du piège. Le débit de réducteurs entrant peut être calculé comme le produit du débit des gaz d'échappement, multiplié par la valeur de la richesse des gaz entrant dans le piège, mesurée par exemple par une sonde à oxygène implantée en amont du piège. De la même manière, le débit de réducteurs sortant peut être calculé comme le produit du débit des gaz d'échappement, multiplié par la valeur de la richesse des gaz sortant du piège, mesurée par exemple par une autre sonde à oxygène implantée en aval du piège.

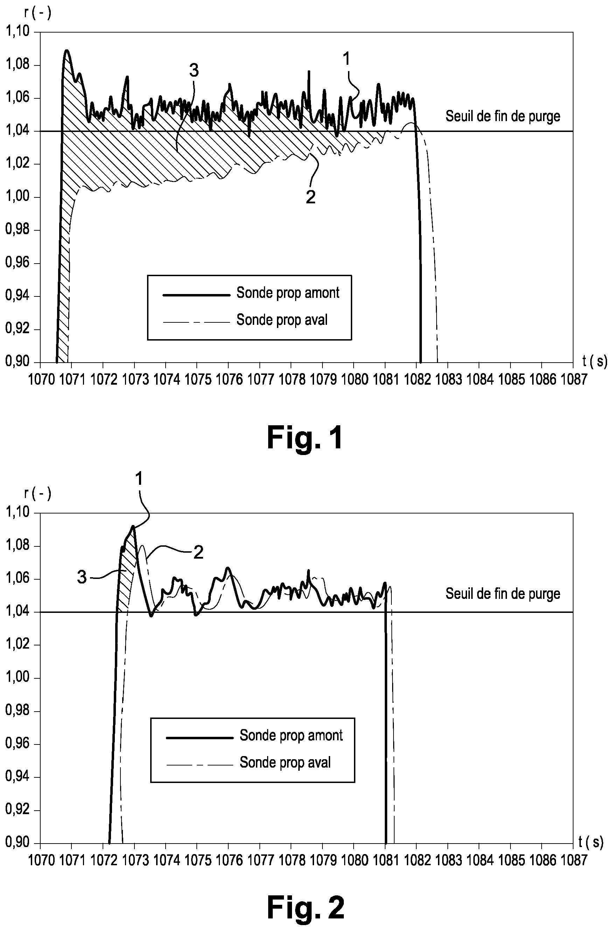

Comme le montrent les figures 1 et 2 annexées, un tel procédé permet de détecter correctement des pièges qui ont perdu toute leur efficacité de stockage et de distinguer sans ambigüité un piège en bon état d'un piège défectueux.

Sur chacune de ces figures, on a représenté en abscisse le temps t pendant lequel la régénération d'un piège à oxydes d'azote se déroule, et en ordonnée, la richesse des gaz d'échappement à l'entrée ou à la sortie d'un piège. La courbe 1 en trait plein représente la valeur de la richesse mesurée par une sonde à oxygène placée en amont du piège, et la courbe 2 en trait mixte représente la valeur de la richesse mesurée par une sonde à oxygène placée en aval du piège.

Pour un débit de gaz d'échappement constant, la masse de réducteurs consommée lors de la purge, qui est l'objet de la publication FR 2 940 356-B1, est représentée par la surface hachurée 3 située entre les deux courbes de richesse précédentes, entre l'instant du début de la régénération et l'instant de la fin de la régénération.

La régénération commence lorsque la richesse des gaz est augmentée à une valeur supérieure à 1,04, et elle se termine à l'instant où le stock d'oxydes d'azote dans le piège est entièrement réduit, c'est-à-dire lorsqu'on peut constater qu'il n'y a plus de consommation de réducteurs à l'intérieur du piège. En d'autres termes, la régénération est stoppée au moment où la richesse des gaz à la sortie du piège rejoint la valeur de la richesse des gaz à l'entrée du piège, ici 1,04. Le fonctionnement du moteur est alors basculé à nouveau en mélange pauvre, ce qui est matérialisé sur les figures 1 et 2 par la brutale chute de richesse à une valeur inférieure à 0,9.

La surface hachurée 3 sur la figure 1 représente la quantité de réducteurs consommée pendant une phase de régénération d'un piège en bon état, par exemple un piège dont l'efficacité est de 70%. La surface hachurée sur la figure 2 représente la quantité de réducteurs consommée pendant une phase de régénération d'un piège complètement dégradé, par exemple un piège dont l'efficacité résiduelle est de 0%.

Malgré un certain manque de répétabilité de la mesure et une certaine dispersion liée aux tolérances de fabrication des différentes pièces du moteur et des conditions de roulage dans lesquelles se déroule la régénération, on a constaté que la quantité de réducteurs consommée pour un piège d'efficacité nulle est toujours inférieure à celle d'un piège dont l'efficacité est bonne (70%). Le diagnostic est donc fiable lorsqu'on répète la régénération et le calcul du débit de réducteurs.

En revanche, avec la sévérité toujours accrue des normes OBD, il devient nécessaire de distinguer un piège bon (par exemple ayant une efficacité de 70%) d'un piège dont l'efficacité n'est pas tout à fait nulle, par exemple un piège dont l'efficacité résiduelle est encore de 12%.

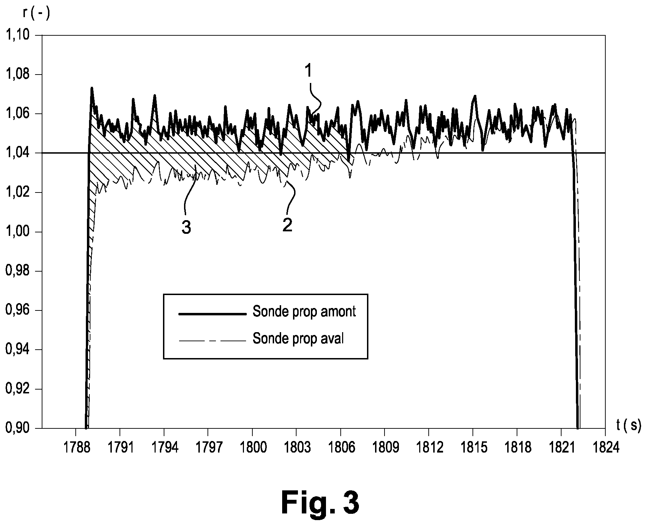

De la même manière que les figures 1 et 2, la surface hachurée sur la figure 3 représente la quantité de réducteurs consommée qui a été mesurée lors d'une purge d'un piège dont l'efficacité résiduelle est de 12%. On observe sur cette figure que la quantité de réducteurs est très voisine de celle qui est représentée sur la figure 1. A cause de la répétabilité de la mesure et de la dispersion des composants et des conditions de roulage, il n'est pas toujours possible de distinguer les deux pièges. En d'autres termes, le procédé comporte un risque statistique de non-détection (piège défaillant déclaré bon) et de fausse détection (piège bon déclaré défaillant).

RESUME DE L'INVENTION

L'invention propose de remédier au manque de précision et aux risques de diagnostics erronés des procédés de diagnostics connus dans lesquels on détermine un critère de diagnostic à partir de la masse de réducteurs consommée pendant la phase de régénération du piège.

Elle propose pour cela un procédé de diagnostic d'un piège à oxydes d'azote associé à un moteur à combustion interne, ledit piège étant apte à décomposer les oxydes d'azote stockés en son sein par réaction avec des réducteurs, pendant une étape de régénération du piège provoquée par un basculement du mode de fonctionnement du moteur en mélange riche, ledit procédé comprenant :

- Une étape de détermination de la masse de réducteurs consommée au cours d'une étape de régénération ;
- Une étape de comparaison de ladite masse avec un seuil de défaillance en dessous duquel on détermine que le piège est défaillant ; et,
- Une étape d'émission d'un signal indiquant l'état de défaillance du piège,

Ledit procédé étant caractérisé en ce qu'on détermine la masse de réducteurs au cours d'une étape de régénération spéciale du piège réalisée aux fins du diagnostic à une deuxième valeur de richesse de fonctionnement du moteur qui est supérieure à une première valeur de richesse de fonctionnement d'une étape de régénération ordinaire du piège.

Avantageusement, la deuxième valeur de richesse est sensiblement égale à 1,10, la première valeur de richesse étant comprise entre 1,03 et 1,05.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 4 illustre un dispositif de diagnostic d'un piège à oxydes d'azote ;
- la figure 5 est un organigramme des étapes d'un procédé de diagnostic d'un piège à oxydes d'azote conforme à l'invention ; et,
- les figures 6 et 7 sont une illustration du critère de diagnostic selon l'invention, respectivement pour un piège dont l'efficacité est égale à 70% et pour un piège dont l'efficacité est égale à 12%.

DESCRIPTION DETAILLEE DES FIGURES

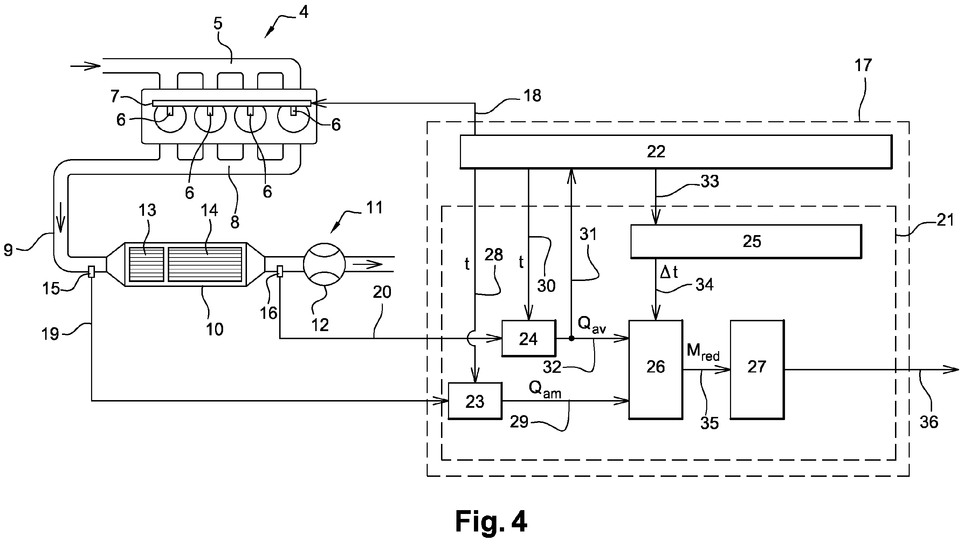

Sur la figure 4, on a représenté un moteur 4 à combustion interne, par exemple un moteur diesel de véhicule automobile, pourvu d'un dispositif de diagnostic selon l'invention. Le moteur 4 est alimenté en air par un collecteur d'admission 5 et en carburant, par exemple du gazole, par une pluralité d'injecteurs 6 montés sur une rampe commune 7 d'alimentation en carburant.

Le moteur 4 est équipé d'un circuit d'échappement des gaz brûlés, comprenant un collecteur d'échappement 8, une conduite d'échappement 9, un dispositif de traitement 10 des émissions polluantes du moteur 4 et un pot d'échappement 11 sur lequel est monté un débitmètre 12, par lequel les gaz d'échappement sont évacués dans l'atmosphère.

Le moteur peut être du type suralimenté et/ou associé à au moins un circuit de recirculation des gaz d'échappement sans pour autant sortir du cadre de l'invention.

Le dispositif de traitement 10 des émissions polluantes se présente sous la forme d'une enveloppe métallique (ou « canning ») de forme sensiblement cylindrique terminée à ses deux extrémités par deux cônes de liaison respectivement avec la conduite d'échappement 9 et le pot d'échappement 11.

Cette enveloppe métallique contient un piège à oxydes d'azote 13. De manière non limitative, elle peut comprendre aussi un autre dispositif 14 de traitement des gaz d'échappement, par exemple un filtre à particules 14 ou un catalyseur d'oxydation 14, qui est disposé ici en aval du piège 13 (dans le sens de circulation des gaz d'échappement figuré par les flèches représentées sur la figure 4).

Le piège à oxydes d'azote 13 stocke une partie des émissions de $NO_x$ du moteur 1 quand celui-ci fonctionne en mélange pauvre. Périodiquement, lorsqu'une phase de fonctionnement du moteur 4 en mélange riche (dite : phase de régénération, ou phase de purge) est déclenchée, le piège 13 réduit les $NO_x$ en molécules d'azote $N_2$ et de dioxyde de carbone $CO_2$ sous l'action de réducteurs, c'est-à-dire de molécules de monoxyde de carbone et d'hydrocarbures imbrûlés émises par le moteur 4.

Le piège à oxydes d'azote 13 est associé à des moyens de détermination de la richesse des gaz d'échappement du moteur 4 respectivement à l'entrée et à la sortie du piège 13, par exemple respectivement une sonde à oxygène amont 15, disposée sur la conduite d'échappement 9 en amont du piège 13, et une sonde à oxygène aval 16, disposée sur le pot d'échappement 11 en aval du piège 13.

Un calculateur électronique 17 est reliée au moteur 4 par une connexion 18, à la sonde à oxygène amont 15 par une connexion 19 et à la sonde à oxygène aval 16 par une connexion 20. Le calculateur 17 comprend également un dispositif de diagnostic embarqué 21 et un moyen de commande 22 du moteur qui permet notamment de déclencher :

- Une régénération ordinaire du piège à oxydes d'azote 13 par basculement du mode de fonctionnement du moteur 4 en mélange riche, à une première valeur de richesse R1 relativement faible, quand la masse d'oxydes d'azote stockée dans le piège 13 atteint un seuil, sans qu'un diagnostic du piège ne doive être fait ;

- Une régénération spéciale du piège 13 à des fins de diagnostic, par basculement du mode de fonctionnement du moteur 4 en mélange riche, à une deuxième valeur de richesse R2 relativement élevée, quand la masse d'oxydes d'azote stockée dans le piège 13 atteint un seuil, et qu'un diagnostic doit être fait ; et

- Un fonctionnement du moteur 4 en mode normal, qui est un mode de stockage des oxydes d'azote, par basculement du mode de fonctionnement du moteur 4 en mélange pauvre.

La deuxième valeur de richesse R2 est supérieure à la première valeur de richesse R1. Avantageusement, la première valeur de richesse R1 est comprise entre 1,03 et 1,05 et la deuxième valeur de richesse R2 est sensiblement égale à 1,10.

Pour déterminer si un diagnostic doit être fait, c'est-à-dire à quelle valeur de richesse R1,R2 la régénération doit être lancée, le calculateur 17 peut par exemple déterminer le kilométrage parcouru par le véhicule depuis le précédent diagnostic et le comparer avec un seuil. Si ledit kilométrage est supérieur au seuil, alors le calculateur 17 force la régénération du piège 13 à la deuxième valeur de richesse R2.

Le dispositif de diagnostic 21 comprend :

- un moyen de détermination 23 du débit massique de réducteurs (monoxyde de carbone et hydrocarbures imbrûlés) contenus dans les gaz d'échappement en amont $Q_{am}$ du piège 13 ;

- un moyen de détermination 24 du débit massique de réducteurs contenus dans les gaz d'échappement en aval $Q_{av}$ du piège 13 ;

- un moyen d'estimation 25 de la durée $\Delta t$ d'une régénération partielle du piège, qui est la durée après laquelle la richesse mesurée par la sonde aval 16 atteint une troisième valeur de richesse R3, inférieure à la deuxième valeur de richesse R2 ;

- un moyen d'estimation 26 de la masse de réducteurs $M_{red}$ consommée pendant ladite régénération partielle ;

- un moyen de détermination 27 de l'état de défaillance du piège à oxydes d'azote 13.

Le moyen de détermination 23 du débit massique $Q_{am}$ de réducteurs mesuré en amont du piège 13 est relié en entrée :

- par la connexion 19, à la sonde à oxygène amont 15 ; et

- par une connexion 28, au moyen de commande 22 du moteur.

Il est également relié en entrée au débitmètre 12 par une connexion non représentée. En sortie, il est relié par une connexion 29 au moyen d'estimation 26 de la masse de réducteurs $M_{red}$ consommée pendant la régénération partielle.

Le moyen de détermination 24 du débit massique de réducteurs mesuré en aval $Q_{av}$ du piège 13 est relié en entrée :

- par la connexion 20, à la sonde à oxygène aval 16 ; et
- par une connexion 30, au moyen de commande 22 du moteur.

Il est également relié en entrée au débitmètre 12 par une connexion non représentée. En sortie, il est relié par une connexion 31 au moyen de commande 22, et par une connexion 32 au moyen d'estimation 26 de la masse de réducteurs $M_{red}$.

Le moyen d'estimation 25 de la durée $\Delta t$ de la phase de régénération partielle est relié en entrée au moyen de commande 22 du moteur par une connexion 33. En sortie, il est relié au moyen d'estimation 26 de la masse de réducteurs $M_{red}$ consommée, par une connexion 34.

En sortie, le moyen d'estimation 26 de la masse de réducteurs $M_{red}$ est relié par une connexion 35 au moyen de détermination 27 de l'état de défaillance du piège à oxydes d'azote 13, dont la sortie est elle-même reliée par une connexion 36 à d'autres éléments (non représentés sur la figure 4) du calculateur 17 aptes à utiliser le résultat du diagnostic, par exemple des moyens d'allumage d'une lampe témoin au tableau de bord du véhicule.

Selon l'invention, le moyen de commande 22 est apte à commander une régénération spéciale du piège 13 à des fins de diagnostic, quand la masse d'oxydes d'azote atteint un seuil, et qu'un diagnostic doit être fait. Plus précisément, il commande un basculement du mode de fonctionnement du moteur en mélange riche à la seconde valeur de richesse R2, par exemple 1,10, à partir d'une richesse inférieure à la stoechiométrie, par exemple une richesse inférieure à 0,9.

La richesse $Q_{av}$ mesurée par la sonde de richesse aval 16 commence alors à augmenter également à partir de cette richesse inférieure à la stoechiométrie, et après une durée $\Delta t$ à laquelle le piège 13 n'est encore que partiellement régénéré, ladite richesse $R_{av}$ atteint une troisième valeur de richesse R3, inférieure à la seconde valeur de richesse R2, et qui est représentative du basculement de la richesse des gaz d'échappement en aval du piège 13 en mélange riche. Avantageusement, la troisième valeur de richesse est sensiblement égale à 1,04.

Au début de la régénération, le calculateur 17 émet un signal permettant de déclencher le calcul des débits massiques de réducteurs $Q_{am}$, $Q_{av}$ en amont et

en aval du piège 13 pendant la régénération partielle du piège. Ces débits sont calculés respectivement par les équations suivantes :

$$(Eq.1) \qquad Q_{am} = Q_{ech} * R_{am}$$

$$(Eq.2) \qquad Q_{av} = Q_{ech} * R_{av}$$

,dans lesquelles :

- $Q_{ech}$ désigne le débit des gaz d'échappement, mesuré par le débitmètre 12 ;
- $R_{am}$ désigne la richesse des gaz d'échappement en amont du piège 13, mesurée par la sonde à oxygène amont 15 ; et
- $R_{av}$ désigne la richesse des gaz d'échappement en aval du piège 13, mesurée par la sonde à oxygène aval 16.

Ce signal sert également de déclencheur à l'intégration temporelle des débits massiques $Q_{am}$, $Q_{av}$ de réducteurs, dans le moyen d'estimation 26. La masse de réducteurs $M_{red}$ consommée dans le piège 13 est obtenue par l'équation suivante :

$$(Eq.3) \qquad M_{red} = \int_{\Delta t} (Q_{am} - Q_{av}) * dt$$

,dans laquelle $\Delta t$ désigne la durée de la régénération partielle pendant laquelle le calcul de l'intégrale est réalisé.

Lorsque la richesse $R_{av}$ mesurée par la sonde aval 16 atteint la troisième valeur de richesse R3, le moyen de commande 22 stoppe l'émission du signal temporel d'intégration dans le moyen d'estimation 26 de la masse de réducteurs.

La régénération spéciale du piège 13 se poursuit ensuite jusqu'à épuisement du stock d'oxydes d'azote, c'est-à-dire jusqu'à ce que la richesse $R_{av}$ mesurée par la sonde aval 16 rejoigne la richesse $R_{am}$ mesurée par la sonde amont 15.

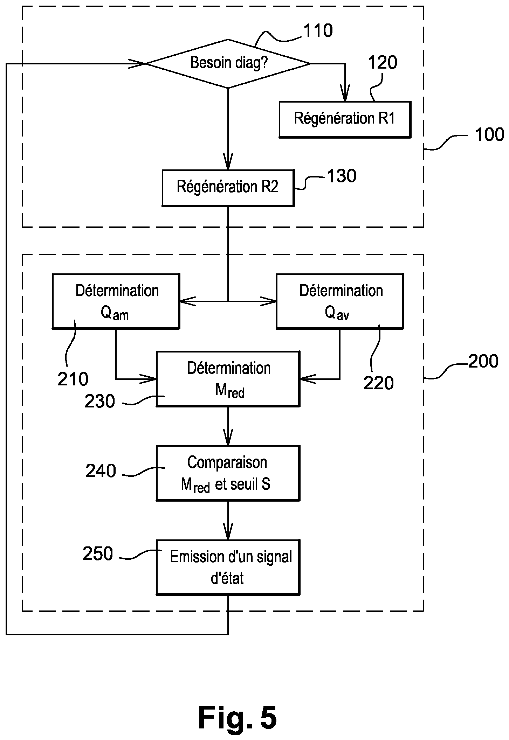

La figure 5 est un organigramme des étapes d'un procédé de diagnostic d'un piège à oxydes d'azote 13 selon l'invention.

Pendant le fonctionnement du moteur 4 en mélange pauvre, un procédé de commande 100 du moteur surveille l'accumulation de $NO_x$ dans le piège à oxydes d'azote 13. Lorsque le piège 13 atteint une valeur prédéterminée de stockage, qui peut être voisine de sa capacité maximale de stockage, le procédé de commande 100 déclenche une première étape de test 110 du piège 13, qui consiste à vérifier si un diagnostic du piège 13 doit être lancé.

Par exemple, le calculateur 17 peut déterminer le kilométrage parcouru par le véhicule depuis le précédent diagnostic et le comparer avec un seuil. Si ledit kilométrage est inférieur au seuil, alors le calculateur 17 détermine qu'il n'est pas nécessaire de procéder à un diagnostic, et le procédé oriente vers une étape de régénération ordinaire 120 du piège à oxydes d'azote 13 par basculement du mode de fonctionnement du moteur 4 en mélange riche, à une première valeur de richesse R1 relativement faible, par exemple comprise entre 1,03 et 1,05.

Dans le cas contraire, le procédé oriente vers une étape de régénération spéciale 130 du piège à des fins de diagnostic, par basculement du mode de fonctionnement du moteur 4 en mélange riche, à une deuxième valeur de richesse R2 relativement élevée, par exemple sensiblement égale à 1,10.

Cette étape de régénération spéciale 130 comprend une phase de régénération partielle du piège 13, pendant une durée $\Delta t$ représentative du basculement de la richesse des gaz en aval du piège 13 en mélange riche. Avantageusement, ce basculement correspond à l'instant où la richesse mesurée par la sonde aval 16 atteint une troisième valeur de richesse R3 sensiblement égale à 1,04.

Le procédé de diagnostic proprement dit 200 du piège à oxydes d'azote 13 peut alors être déclenché. Ce procédé 200 commence par une étape de détermination 210 du débit massique de réducteurs $Q_{am}$ en amont du piège 13, obtenu selon l'équation 1, simultanément avec une étape de détermination 220 du débit massique de réducteurs $Q_{av}$ en aval du piège 13, obtenu selon l'équation 2.

La détermination de ces débits se fait pendant toute la phase de régénération partielle de la régénération spéciale 130. Le procédé de diagnostic 200 se poursuit par une étape 230 de détermination de la masse de réducteurs $M_{red}$ utilisée pendant la phase de régénération partielle. Cette masse est obtenue par intégration temporelle de l'écart des débits de réducteurs $Q_{am}, Q_{av}$ en amont et en aval du piège 13, entre l'instant de la réception du signal de démarrage de la phase de régénération 130 et l'instant de l'arrêt de la réception de ce signal (selon l'équation 3).

Le procédé 200 se poursuit par une étape 240 de la masse de réducteurs $M_{red}$ utilisée pendant la seconde phase de régénération partielle avec un seuil de défaillance S en dessous duquel on détermine que le piège à oxydes d'azote 13 est défaillant. Le seuil de défaillance S peut être déterminé au banc moteur par des essais statistiques.

Le procédé 200 se termine par une étape 250 au cours de laquelle un signal d'état est émis vers le procédé de commande 100 du moteur 1. Ce signal peut prendre deux états, soit un état défaillant, soit un état non défaillant. Lorsque l'état est défaillant, une alerte peut être remontée au conducteur, par exemple par l'allumage d'un voyant lumineux.

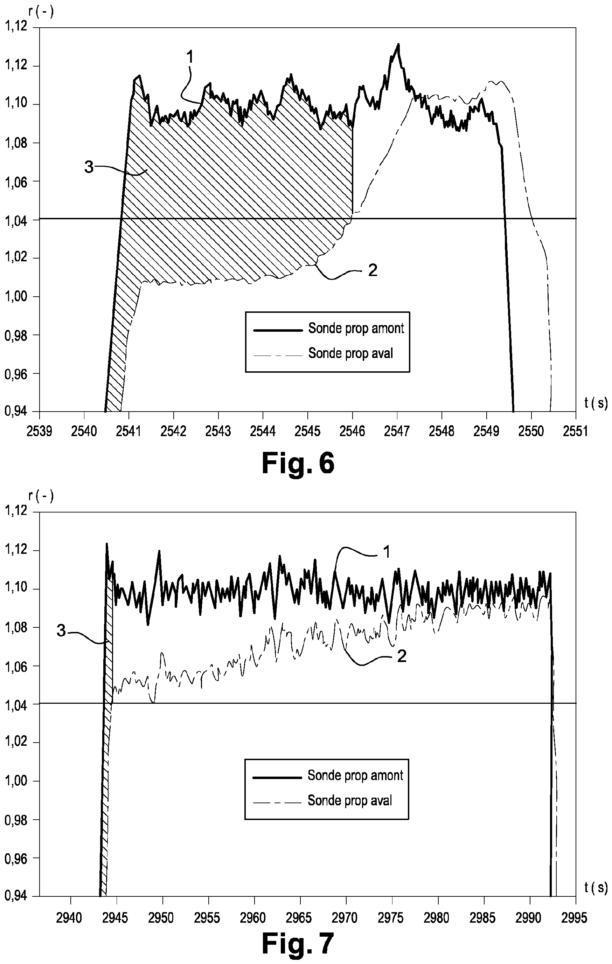

Les figures 6 et 7 illustrent, d'une manière similaire aux figures 1, 2 et 3, l'évolution temporelle de la richesse des gaz à l'entrée et à la sortie d'un piège 13 à oxydes d'azote pendant une phase de commande 100 telle qu'exposé plus haut, plus particulièrement pendant une phase de régénération spéciale 130. Les courbes en trait plein 1 représentent la richesse mesurée par la sonde à oxygène amont 15 et les courbes en trait mixte 2 représentent la richesse mesurée par la sonde à oxygène aval 16.

La figure 6 représente le comportement d'un piège 13 en bon état, par exemple un piège dont l'efficacité a une valeur égale à 70%. La régénération spéciale 130 se déroule ici sensiblement entre les instants t = 2540,5 s et t =2547,5 s. La phase de régénération partielle prend fin à l'instant t = 2546 s, c'est-à-dire qu'elle a une durée comprise entre 5 et 6 secondes. La surface hachurée 3 représente la masse de réducteurs $M_{red}$ consommée pendant la phase de régénération partielle.

La figure 7 représente le comportement d'un piège 13 dégradé, par exemple un piège dont l'efficacité a une valeur égale à 12%. La phase de régénération partielle se déroule ici sensiblement entre les instants t = 2944 s et t = 2945 s, c'est-à-dire qu'elle dure moins de 1 seconde. On observe ici que la surface hachurée 3, représentant la masse de réducteurs $M_{red}$ consommée pendant la phase de régénération partielle, est de très loin moins élevée que sur la figure 6.

En effet, quand on procède à une régénération spéciale du piège à une valeur de richesse relativement élevée R2, on apporte brutalement une grande quantité de réducteurs au piège 13. Un piège en bon état de fonctionnement parvient à retenir en son sein une telle quantité de réducteurs pour la réduction des oxydes d'azote, de sorte que la richesse des gaz d'échappement en aval du piège est relativement lente à basculer en mélange riche.

Dans le cas d'un piège en mauvais état de fonctionnement, l'afflux de réducteurs est trop rapide. Une grande partie des réducteurs passe à travers le piège 13 sans y être retenu, faisant basculer la richesse des gaz d'échappement en aval du piège en mélange riche de manière quasi-instantanée. Seule une fraction des réducteurs apportés au piège réduit effectivement les oxydes d'azote qui y sont stockés.

Ainsi, contrairement à une régénération ordinaire 120 effectuée à une richesse R1 relativement faible, une régénération spéciale 130 effectuée à une richesse relativement élevée R2 permet de distinguer clairement un piège en bon état d'un piège défectueux.

## Revendications

1. Procédé de diagnostic (200) d'un piège à oxydes d'azote (13) associé à un moteur (4) à combustion interne, ledit piège (13) étant apte à décomposer les oxydes d'azote stockés en son sein par réaction avec des réducteurs, pendant une étape de régénération (120,130) du piège (13) provoquée par un basculement du mode de fonctionnement du moteur (4) en mélange riche, ledit procédé comprenant :

- une étape de détermination (230) de la masse de réducteurs ($M_{red}$) consommée au cours d'une étape de régénération ;
- une étape (240) de comparaison de ladite masse ($M_{red}$) avec un seuil de défaillance (S) en dessous duquel on détermine que le piège (13) est défaillant ; et
- une étape (250) d'émission d'un signal indiquant l'état de défaillance du piège (13),

**CARACTERISE EN CE QU'**

on détermine la masse de réducteurs ($M_{red}$) au cours d'une étape de régénération spéciale (130) du piège (4) réalisée aux fins du diagnostic à une deuxième valeur de richesse (R2) de fonctionnement du moteur (4) qui est supérieure à une première valeur de richesse (R1) de fonctionnement d'une étape de régénération ordinaire (120) du piège (13).

2. Procédé de diagnostic (200) selon la revendication 1, dans lequel la deuxième valeur de richesse (R2) est sensiblement égale à 1,10 et dans lequel la première valeur de richesse (R1) est comprise entre 1,03 et 1,05.

3. Procédé de diagnostic (200) selon l'une des revendications 1 ou 2, dans lequel la masse de réducteurs est calculée pendant la durée ($\Delta t$) d'une phase de régénération partielle de l'étape de régénération spéciale (130) du piège (13).

4. Procédé de diagnostic (200) selon la revendication 3, dans lequel la durée ($\Delta t$) de la phase de régénération partielle débute lors du basculement du fonctionnement du moteur (4) à la deuxième valeur de richesse (R2), et s'achève lorsque la richesse des gaz d'échappement du moteur (4) à la sortie du piège (13) atteint une troisième valeur de richesse (R3).

5. Procédé de diagnostic selon la revendication 4, dans lequel la troisième valeur de richesse (R3) est inférieure à la deuxième valeur de richesse (R2).

6. Procédé de diagnostic selon la revendication 5, dans lequel la troisième valeur de richesse (R3) est sensiblement égale à 1,04.

7. Procédé de diagnostic (200) selon l'une quelconque des revendications 3 à 6, dans lequel la masse de réducteurs ($M_{red}$) est calculée comme l'intégrale temporelle, pendant la durée de la durée ($\Delta t$) de la phase de régénération partielle, de la différence entre un débit massique de réducteurs en amont ($Q_{am}$) du piège (13) et un débit massique de réducteurs en aval ($Q_{av}$) du piège (13).

8. Dispositif de diagnostic (17) d'un piège à oxydes d'azote (13) pour le traitement des émissions polluantes d'un moteur (4) pour la mise en oeuvre du procédé (200) selon l'une quelconque des revendications précédentes, comprenant :

- un moyen de détermination (23) du débit de réducteurs ($Q_{am}$) contenus dans les gaz d'échappement du moteur (4) en amont du piège (13), mesuré au cours d'une étape de régénération, relié à une sonde à oxygène (15) située en amont du piège (13) ;
- un moyen de détermination (24) du débit de réducteurs ($Q_{av}$) contenus dans les gaz d'échappement du moteur (4) en aval du piège (13), mesuré au cours d'une étape de régénération, relié à une sonde à oxygène (16) située en aval du piège (13) ;
- un moyen de détermination (26) de la masse de réducteurs ($M_{red}$) consommée au cours d'une étape de régénération, relié au moyen de détermination (23) du débit de réducteurs ($Q_{am}$) en amont du piège (13) et au moyen de détermination (24) du débit de réducteurs ($Q_{av}$) en aval du piège (13) ;
- un moyen de détermination (27) de l'état de défaillance du piège (13) en fonction de ladite masse de réducteurs ($M_{red}$) ;

**CARACTERISE EN CE QU'**

ledit dispositif de diagnostic (17) comprend en outre un moyen de commande (22) du moteur apte à basculer le mode de fonctionnement du moteur (4) en mélange riche, à une première valeur de richesse (R1) pour une régénération ordinaire (120) du piège (13), ou à une deuxième valeur de richesse (R2) qui est supérieure à la première, pour une régénération spéciale (130) du piège provoquée aux fins du diagnostic (200).

**Patentansprüche**

1. Verfahren zur Diagnose (200) einer einem Verbrennungsmotor (4) zugeordneten Stickoxidfalle (13), wobei die Falle (13) die in ihr gelagerten Stickoxide durch Reaktion mit Reduktionsmitteln während eines Regenerationsschritts (120, 130) der Falle (13) zerlegen kann, der durch ein Umschalten der Betriebsart des Motors (4) mit fettem Gemisch eingeleitet wird, wobei das Verfahren enthält:

- einen Schritt der Festlegung (230) der während eines Regenerationsschritt verbrauchten Reduktionsmittelmasse ($M_{red}$);
- einen Schritt (240) des Vergleichs der Masse ($M_{red}$) mit einer Defektschwelle (S), unterhalb der festgelegt wird, dass die Falle (13) defekt ist; und
- einen Schritt (250) des Sendens eines Signals, das den Defektzustand der Falle (13) anzeigt,

**dadurch gekennzeichnet, dass** die Reduktionsmittelmasse (M_red) während eines speziellen Regenerationsschritts (130) der Falle (4) festgelegt wird, der zum Zweck der Diagnose auf einem zweiten Betriebs-Anreicherungswert (R2) des Motors (4) durchgeführt wird, der höher als ein erster Betriebs-Anreicherungswert (R1) eines normalen Regenerationsschritts (120) der Falle (13) ist.

2. Diagnoseverfahren (200) nach Anspruch 1, wobei der zweite Anreicherungswert (R2) im Wesentlichen gleich 1,10 ist, und wobei der erste Anreicherungswert (R1) zwischen 1,03 und 1,05 liegt.

3. Diagnoseverfahren (200) nach einem der Ansprüche 1 oder 2, wobei die Reduktionsmittelmasse während der Dauer ($\Delta t$) einer Teilregenerationsphase des speziellen Regenerationsschritts (130) der Falle (13) berechnet wird.

4. Diagnoseverfahren (200) nach Anspruch 3, wobei die Dauer ($\Delta t$) der Teilregenerationsphase beim Umschalten des Betriebs des Motors (4) auf den zweiten Anreicherungswert (R2) beginnt und endet, wenn die Anreicherung der Abgase des Motors (4) am Ausgang der Falle (13) einen dritten Anreicherungswert (R3) erreicht.

5. Diagnoseverfahren nach Anspruch 4, wobei der dritte Anreicherungswert (R3) niedriger als der zweite Anreicherungswert (R2) ist.

6. Diagnoseverfahren nach Anspruch 5, wobei der dritte Anreicherungswert (R3) im Wesentlichen gleich 1,04 ist.

7. Diagnoseverfahren (200) nach einem der Ansprüche 3 bis 6, wobei die Reduktionsmittelmasse (M_red) als das Zeitintegral, während der Dauer der Dauer ($\Delta t$) der Teilregenerationsphase, der Differenz zwischen einem Massendurchsatz von Reduktionsmitteln stromaufwärts ($Q_{am}$) vor der Falle (13) und einem Massendurchsatz von Reduktionsmitteln stromabwärts ($Q_{av}$) hinter der Falle (13) berechnet wird.

8. Vorrichtung zur Diagnose (17) einer Stickoxidfalle (13) zur Behandlung der Schadstoffemissionen eines Motors (4) zur Durchführung des Verfahrens (200) nach einem der vorhergehenden Ansprüche, die enthält:

- eine Einrichtung zur Festlegung (23) des Durchsatzes von Reduktionsmitteln ($Q_{am}$), die

in den Abgasen des Motors (4) stromaufwärts vor der Falle (13) enthalten sind, gemessen während e3ines Regenerationsschritts, verbunden mit einer Sauerstoffsonde (15), die sich stromaufwärts vor der Falle (13) befindet;
- eine Einrichtung zur Festlegung (24) des Durchsatzes von Reduktionsmitteln ($Q_{av}$), die in den Abgasen des Motors (4) stromabwärts hinter der Falle (13) enthalten sind, gemessen während e3ines Regenerationsschritts, verbunden mit einer Sauerstoffsonde (16), die sich stromabwärts hinter der Falle (13) befindet;
- eine Einrichtung zur Festlegung (26) der während eines Regenerationsschritts verbrauchten Reduktionsmittelmasse (M_red), verbunden mit der Einrichtung zur Festlegung (23) des Durchsatzes von Reduktionsmitteln ($Q_{am}$) stromaufwärts vor der Falle (13) und mit der Einrichtung zur Festlegung (24) des Durchsatzes von Reduktionsmitteln ($Q_{av}$) stromabwärts hinter der Falle (13);
- eine Einrichtung zur Festlegung (27) des Defektzustands der Falle (13) abhängig von der Reduktionsmittelmasse (M_red);

**dadurch gekennzeichnet, dass** die Diagnosevorrichtung (17) außerdem eine Steuereinrichtung (22) des Motors enthält, die die Betriebsart des Motors (4) mit fettem Gemisch auf einen ersten Anreicherungswert (R1) für eine normale Regeneration (120) der Falle (13), oder auf einen zweiten Anreicherungswert (R2), der höher ist als der erste, für eine spezielle Regeneration (130) der Falle umschalten kann, die zum Zweck der Diagnose (200) eingeleitet wird.

**Claims**

1. Method (200) for diagnosing a nitrogen oxide trap (13) associated with an internal combustion engine (4), said trap (13) being able to breakdown the nitrogen oxides stored within it by reaction with reducing agents during a trap (13) regeneration step (120, 130) brought about by a switching over of the engine (4) operating mode to rich mixture, said method comprising:

- a step (230) of determining the mass of reducing agents (M_red) consumed during a regeneration step;
- a step (240) of comparing said mass (M_red) against a failure threshold (S) below which the trap (13) is determined to have failed; and
- a step (250) of emitting a signal indicating the failed status of the trap (13),

**CHARACTERIZED IN THAT**

the mass of reducing agents ($M_{red}$) is determined during a special trap (4) regeneration step (130) performed for diagnostic purposes at a second engine (4) operating richness value (R2) which is higher than a first richness value (R1) at which an ordinary trap (13) regeneration step (120) is performed.

2. Diagnostics method (200) according to Claim 1, in which the second richness value (R2) is substantially equal to 1.10 and in which the first richness value (R1) is comprised between 1.03 and 1.05.

3. Diagnostics method (200) according to either of Claims 1 and 2, in which the mass of reducing agents is calculated during the duration ($\Delta t$) of a partial regeneration phase of the special trap (13) regeneration step (130).

4. Diagnostics method (200) according to Claim 3, in which the duration ($\Delta t$) of the partial regeneration phase begins when operation of the engine (4) switches over to the second richness value (R2) and ends when the richness of the engine (4) exhaust gases leaving the trap (13) reaches a third richness value (R3).

5. Diagnostics method according to Claim 4, in which the third richness value (R3) is lower than the second richness value (R2).

6. Diagnostics method according to Claim 5, in which the third richness value (R3) is substantially equal to 1.04.

7. Diagnostics method (200) according to any one of Claims 3 to 6, in which the mass of reducing agents ($M_{red}$) is calculated as the integral with respect to time, during the duration of the duration ($\Delta t$) of the partial regeneration phase, of the difference between a mass flow rate of reducing agents upstream ($Q_{am}$) of the trap (13) and a mass flow rate of reducing agents downstream ($Q_{av}$) of the trap (13).

8. Device (17) for diagnosing a nitrogen oxide trap (13) for the treatment of the pollutant emissions of an engine (4) for implementation of the method (200) according to any one of the preceding claims, comprising:

- a means (23) of determining the flow rate of reducing agents ($Q_{am}$) contained in the exhaust gases from the engine (4) upstream of the trap (13), which is measured during a regeneration step, connected to an oxygen sensor (15) situated upstream of the trap (13);
- a means (24) of determining the flow rate of reducing agents ($Q_{av}$) contained in the exhaust gases from the engine (4) downstream of the trap (13), which is measured during a regeneration step, connected to an oxygen sensor (16) situated downstream of the trap (13) ;
- a means (26) of determining the mass of reducing agents ($M_{red}$) consumed during a regeneration step, connected to the means (23) of determining the flow rate of reducing agents ($Q_{am}$) upstream of the trap (13) and to the means (24) of determining the flow rate of reducing agents ($Q_{av}$) downstream of the trap (13);
- a means (27) of determining the failed status of the trap (13) on the basis of said mass of reducing agents ($M_{red}$);

**CHARACTERIZED IN THAT**
said diagnostic device (17) further comprises an engine control means (22) able to switch over the engine (4) operating mode to rich mixture at a first richness value (R1) for ordinary trap (13) regeneration (120) or at a second richness value (R2) which is higher than the first, for special regeneration (130) of the trap brought about for diagnostic (200) purposes.

**Fig. 1**

**Fig. 2**

**Fig. 3**

**Fig. 4**

**Fig. 5**

**Fig. 6**

**Fig. 7**

**EP 3 060 770 B1**

## RÉFÉRENCES CITÉES DANS LA DESCRIPTION

**Documents brevets cités dans la description**

- FR 2940356 B1